(19) Europäisches Patentamt

European Patent Office

Office européen des brevets

(11) Veröffentlichungsnummer: **0 445 067 B1**

(12) **EUROPÄISCHE PATENTSCHRIFT**

(45) Veröffentlichungstag der Patentschrift: **29.03.95**

(51) Int. Cl.6: **C04B 38/06**, C04B 35/48,
C04B 35/80, B01D 39/20,
C22B 9/02

(21) Anmeldenummer: **91810046.2**

(22) Anmeldetag: **21.01.91**

(54) **Poröser Keramikkörper.**

(30) Priorität: **26.02.90 US 484848**

(43) Veröffentlichungstag der Anmeldung:
**04.09.91 Patentblatt 91/36**

(45) Bekanntmachung des Hinweises auf die
Patenterteilung:
**29.03.95 Patentblatt 95/13**

(84) Benannte Vertragsstaaten:
**DE GB**

(56) Entgegenhaltungen:
EP-A- 0 341 203
FR-A- 2 305 407

PATENT ABSTRACTS OF JAPAN vol. 12, no.
155 (C-494)(3002) 12. Mai 1988

J. OF MATERIALS SCIENCE Bd. 24, Nr. 4,
April 1989, LONDON. GB Seiten 1195 - 1202
S. RAJENDRAN ET AL. 'Preparation ...'

(73) Patentinhaber: **SELEE CORPORATION**
**700 Shepherd Street**
**Hendersonville, N.C. 28792 (US)**

(72) Erfinder: **Bosomworth, Paul**
**1010 Highland Avenue**
**Hendersonville, N.C. 28739 (US)**
Erfinder: **Kelzenberg, Cinta M.**
**Rt. 9, Box 469, Lot 5**
**Hendersonville, N.C. 28739 (US)**
Erfinder: **Butcher, Kenneth**
**Rt. 13, Box 342**
**Hendersonville, N.C. 28739 (US)**

(74) Vertreter: **Burkhart, Hans**
**Alusuisse-Lonza Services AG**
**Patentabteilung**
**CH-8212 Neuhausen am Rheinfall (CH)**

**Beschreibung**

Vorliegende Erfindung bezieht sich auf Keramikkörper enthaltend Zirkoniumdioxid und Aluminiumoxid und ein Verfahren zu deren Herstellung. Derartige Keramikkörper sind besonders als Filter für geschmolzene Metalle geeignet. Geschmolzene Metalle enthalten in der Praxis generell eingedrungene Feststoffe, die für das endgültige metallische Gussprodukt schädlich sind. Diese eingedrungenen Feststoffe stammen normalerweise von drei Quellen. Einige sind Oxidpartikel, die von der auf der Oberfläche schwimmenden Oxidschicht in den Flüssigkeitsstrom gezogen werden.

Andere Feststoffe sind Fragmente von Ofenauskleidungen, Transfertrögen und anderen Teilen der für die Verarbeitung des geschmolzenen Metalls notwendigen Ausrüstung, die erodiert und in das fliessende geschmolzene Metall gelangt. Weitere andere Partikel sind Ausfällungen von unlöslichen Verunreinigungen, wie intermetallische Verbindungen, Boride, Carbide oder Ausfällungen von anderen Metallverbindungen, wie Chloride. Wenn diese Einschlüsse im fertigen Gussprodukt nach der Erstarrung erscheinen, so verursachen diese oft eine verschlechterte Duktilität oder schlechte Endcharakteristiken. Entsprechend ist es wünschenswert eingedrungene Feststoffe aus dem Strom des geschmolzenen Metalles zu entfernen, bevor es in einen festen Körper vergossen wird, der seinerseits als solcher verwendet wird oder der einem Verformungsverfahren, wie Walzen, Schneiden, Extrudieren, Strangpressen etc. unterworfen wird. Filtrierprozesse, die zur Entfernung von eingedrungenen Feststoffen aus Flüssigkeiten dienen, werden derart ausgeführt, dass die mit Feststoffen beladene Flüssigkeit durch ein poröses Filtermedium geleitet wird, das die Feststoffe zurückhält. Die Filtration von flüssigen Metallen schafft spezielle Probleme, da die Flüssigkeit so aggressiv ist, dass es schwierig ist, ein Filtermedium zu finden, das fähig ist diesen Bedingungen zu widerstehen.

Keramische Schaumfilter mit einer offenzelligen Struktur, die durch eine Vielzahl von miteinander verbundenen Hohlräumen, umgeben mit Keramikstegen, charakterisiert sind, werden zur Entfernung von eingedrungenen Feststoffen aus geschmolzenem Metall verwendet. Diese Körper werden aus verschiedenen keramischen Materialien geformt, einschliesslich Aluminiumoxid-Chromdioxid und Zirkoniumdioxid-Aluminiumoxid-Zusammensetzungen. Die US-Patentschriften 3,893,917; 3,947363; 4,024,212; 4,265,659; 4,343,704 und 4,839,049 beschreiben einige dieser keramischen Materialien die zur Bildung von Körpern zur Filtration von geschmolzenem Material gebraucht werden und Verfahren zu deren Herstellung.

Filter aus Zirkoniumdioxid-Aluminiumoxid-Zusammensetzungen, wurde gefunden, finden besonders Anwendung in der Filtration von Stahl. Das rührt daher, dass die Filterkörper ausgezeichnete physikalische Eigenschaften, wie grosse Festigkeit, hohe thermische Schockresistenz und hohe Resistenz gegen Korrosion bei hohen Temperaturen zeigen. Eine Beschränkung bei der Anwendung von Zirkoniumdioxid-Aluminiumoxid-Verbindungen liegt darin, dass es ein Problem darstellt, grosse Filterteile herstellen zu können. Dieses Problem rührt von der Tatsache, dass während der Abkühlphase des Brennzykluses das Zirkoniumdioxid von einer tetragonalen in eine monokline Phase transformiert. Mit dieser Transformation ist eine Volumenexpansion in der Grössenordnung von 3 bis 5% verbunden. Diese Volumenveränderung verursacht kleine Risse (Mikrorisse) um die transformierten Partikel und grosse Risse (Makrorisse), wenn das Zirkoniumdioxid nicht gleichmässig durch den Filterkörper hindurch transformiert. Eine bestimmte Menge an Mikrorissen ist deshalb vorteilhaft, weil eine Resistenz gegen thermischen Schock geschaffen wird, während die Bildung von Makrorissen nicht erwünscht ist. Grosse Filter, insbesondere solche die grösser als 20 cm (8 Inches) sind, sind besonders anfällig auf Makrorissbildung, weil grosse Temperaturgradienten während des Brennzykluses darauf einwirken.

Um Makrorissbildung zu vermeiden, wurde Zirkoniumdioxid mit Calciumoxid oder Magnesiumoxid stabilisiert. Diese Verbindungen gehen in eine solide Lösung in den Zirkoniumdioxidkörpern und verhüten oder reduzieren die Umwandlung von tetragonal in monoklin durch Bildung einer stabilen kubischen Zirkoniumdioxidphase. Diese Stabilisatoren wirken nicht besonders gut in Gegenwart von Aluminiumoxid. Das rührt daher, dass Calcium- und Magnesiumdioxid aus der festen Lösung austreten und bevorzugt mit dem Aluminiumoxid anstatt mit dem Zirkoniumdioxid reagieren.

Entsprechend ist es ein Gegenstand vorliegender Erfindung eine Zirkoniumdioxid-Aluminiumoxid-Zusammensetzung zu beschreiben, die weniger anfällig gegen die Bildung von Makrorissen ist. Ein weiterer Gegenstand vorliegender Erfindung ist das Zuverfügungstellen einer Zirkoniumdioxid-Aluminiumoxid-Zusammensetzung, die zur Bildung von relativ grossen Teilen angewendet werden kann.

Es ist ein weiterer Gegenstand vorliegender Erfindung einen Keramikkörper, geeignet zur Anwendung als Filter für geschmolzene Metalle, zur Verfügung zu stellen, der aus der obengenannten Zirkoniumdioxid-Aluminiumoxid-Zusammensetzung geformt ist.

Es wurde gefunden, dass die vorgenannten Nachteile der Gegenstände mit den Körpern nach vorliegender Erfindung überwunden werden können. Vorliegende Erfindung stellt eine höchst wirkungsvolles keramisches Schaummaterial zur Verfügung, das für die Filtration von geschmolzenem Metall geeignet ist.

Das keramische Schaummaterial weist eine relativ niedrige Dichte und ausgezeichnete Raumtemperatur- und Hochtemperaturfestigkeitseigenschaften auf. Darüber hinaus ist das keramische Schaummaterial weniger anfällig auf die Bildung von Makrorissen und deshalb besonders geeignet für die Herstellung von grossen Teilen. Das keramische Material der Körper nach vorliegender Erfindung umfasst eine Zirkoniumdioxid-Aluminium-Zusammensetzung in welcher das Zirkoniumdioxid wenigstens teilweise oder ganz mit Yttriumoxid stabilisiert ist. Das keramische Material der Körper kann eine mit Yttriumoxid stabilisierte Zirkoniumdioxid-Aluminiumoxid-Zusammensetzung enthalten. Bei Raumtemperatur sind 5% bis 80% des Zirkoniumdioxids des keramischen Materials, vorzugsweise von 40% bis 60%, in einer monoklinen Phase, während der Rest im wesentlichen in einer kubischen Phase ist. Als ein Resultat daraus ist das keramische Material wesentlich weniger empfindlich auf die Bildung von Makrorissen. Die Menge an Yttriumoxid in der Zusammensetzung ist im Bereich von 1,1% bis 3,4% vorzugsweise von 1,7% bis 2,2%. In vorliegenden Angaben bedeuten die Prozentzahlen Gewichtsprozent, ausser es ist anderweitig angegeben.

Ein Filterkörper in Uebereinstimmung mit vorliegender Erfindung wird hergestellt durch: imprägnieren eines organischen Schaummaterials mit einem wässrigen thixotropen Schlicker, enthaltend Zirkoniumdioxid, Yttriumoxid und Aluminiumoxid, ausquetschen überschüssigen Schlickers, trocknen des imprägnierten Schaummaterials und aufheizen des imprägnierten Schaummaterials auf eine Temperatur im Bereich von 1570°C bis 1620°C für einen Zeitintervall im Bereich von 15 Minuten bis 3 Stunden. Während des Aufheizschrittes verflüchtigt sich das organische Schaummaterial. Wenn der Körper nach dem Aufheizen abkühlt, wird das Zirkoniumdioxid zumindest teilweise in einer kubischen Phase stabilisiert.

Es wurde auch gefunden, dass das Verfahren nach vorliegender Erfindung ein billiges poröses keramisches Filtermedium mit den vorgenannten physikalischen Eigenschaften und verbesserter Verlässlichkeit zur Verfügung stellt.

In Übereinstimmung mit vorliegender Erfindung kann ein keramischer Schaumkörper, geeignet für die Anwendung zum Filtrieren von geschmolzenem Metall, wie geschmolzenem Stahl, hergestellt werden aus einem offenzelligen, hydrophilen flexiblen Schaummaterial mit einer Vielzahl von miteinander verbundenen Hohlräumen, die mit Stegen aus flexiblem Schaummaterial umgeben sind. Typische Schaummaterialien, die angewendet werden können, umfassen polymerische Schäume, wie Polyurethanschaum und cellulosische Schäume. Generell kann jeder verbrennbare organische Kunststoffschaum, der Rückformkraft und die Fähigkeit in seine Ursprungsform zurückzugehen hat, angewendet werden.

Das Schaummaterial, das angewendet wird, muss bei einer Temperatur ausbrennen oder verflüchtigen, die bei oder unter der Brenntemperatur des verwendeten keramischen Materials liegt. Es sollte eine Porosität im Bereich von 5 bis 100 Poren per Inch (2 bis 40 Poren je laufendem cm) aufweisen, um die notwendige Filterfläche zur Verfügung zu stellen. Die Dimensionen des Schaummaterials können selbstverständlich variieren, entsprechend den gewünschten Dimensionen des End-Filtermaterials. Normalerweise verwendet man ein Schaummaterial mit einer Dicke von 6 mm bis 10 cm und bevorzugt von 2,5 bis 7,5 cm, noch grössere Stücke können zur Herstellung grösserer Teile gebraucht werden.

Wässrige keramische Schlicker enthaltend Zirkoniumdioxid und Aluminiumoxid werden zur Herstellung von Keramikkörpern für die Anwendung als Filter für geschmolzene Metalle verwendet. In einigen dieser Schlickern wird das Zirkoniumdioxid mit Calciumoxid oder Magnesiumoxid stabilisiert, um Makrorisse zu vermeiden. Wie vorstehend erwähnt, wurde gefunden, dass diese Stabilisatoren in Gegenwart von Aluminiumoxid keine gute Wirkung zeigen. Der Grund dafür ist, dass Calciumoxid oder Magnesiumoxid aus der festen Lösung austreten und mit dem Aluminiumoxid reagieren. Oft verbleibt das Zirkoniumdioxid in solchen Zusammensetzungen komplett in einer monoklinen Phase bei Raumtemperatur.

In Übereinstimmung mit vorliegender Erfindung wird ein wässriger Schlicker gebildet, enthaltend von 32% bis 64% Zirkoniumdioxid, von 1,0% bis 3,4% Yttriumoxid, um zumindest teilweise das Zirkoniumoxid in kubischer Form zu stabilisieren und im wesentlichen die Bildung von Makrorissen zu vermeiden, von 13,6% bis 47,2% Aluminiumoxid und dem Rest im wesentlichen Wasser. Diese Schlicker-Zusammensetzung hat den Vorteil, dass Yttriumoxid, nicht wie Calciumoxid und Magnesiumoxid, eine Bevorzugung für Zirkoniumdioxid zeigt, dies selbst in Gegenwart von Aluminiumoxid.

Es wurde gefunden dass die Menge des angewendeten Yttriumoxides kritisch ist. Wird zu viel Yttriumoxid angewendet, so hat der geformte keramische Körper eine schlechte Wärmeschockresistenz. Wird zu wenig Yttriumoxid angewendet, so brechen grosse Teile während dem Brennzyklus.

Zusätzlich, zu den vorgenannten Bestandteilen, kann der Schlicker von 0,8% bis 3% keramische Fasern, wie Aluminiumoxidfasern, zur Vermeidung von Rissen während des Trocknens, zur Verbesserung der Festigkeit 0,2% bis 0,3% eines Binders, wie Xanthan-Gummi für die Grünfestigkeit und Schlicker-Stabilität, und/oder von 0,2% bis 2% eines Dispergiermittels, wie das Salz einer polymerischen Carboxylsäure in wässriger Lösung, für maximalen Feststoffgehalt und pH-Kontrolle enthalten.

In einer bevorzugten Ausführungsform hat der wässrige Schlicker eine Zusammensetzung im wesentlichen von 56,0% bis 56,6% Zirkoniumdioxid, von 1,5% bis 2,0% Yttriumoxid, von 28,1% bis 28,4% Aluminiumoxid, 0,86 bis 0,87% keramische Fasern, von 0,22 bis 0,23% Binder, von 1,9% bis 1,92% Dispergiermittel und einen Rest von im wesentlichen Wasser. Das Wasser kann bei Raumtemperatur zugegeben werden und kann heisses Wasser oder kaltes Wasser sein.

Der wässrige Schlicker wir dauf folgende Weise hergestellt:

1. Der Binder wird in heissem Wasser vollständig gelöst durch mischen in einem Mischer (z.B. Modell HDM75, geliefert durch Charles Ross & Son Company of Hauppage, New York).

2. Das Yttriumoxid wird zum Dispergiermittel zugegeben und für etwa 15 Minuten mittels eines Impeller-Mischerblattes oder einem sog. "lightening"-Mischer zu einer glatten Paste gemischt.

3. Die Yttriumoxid/Dispergiermittelpaste wird dann zur Binderlösung in einem Mixer mit niedrigen Scherkräften für 10 Minuten gemischt.

4. Das Zirkoniumdioxid und Aluminiumoxid werden trocken in einen Mischer mit hohen Scherkräften (z.B. Modell RL 09 geliefert von Eirich of Maple, Ontario, Canada) während einer Minute gemischt. Keramische Fasern werden dann zugegeben und während 3 Minuten noch kräftiger gemischt.

5. Das binderhaltige Gemisch aus dem Mischer mit niedrigen Scherkräften wird zu den trockenen Feststoffen in den Mischer mit hohen Scherkräften gegeben und sorgfältig für 3 Minuten vorgemischt. Der Ansatz wird für weitere 4 Minuten heftiger gemischt und dann während weiteren 2 Minuten bei grösster Mischgeschwindigkeit vollständig gemischt.

Zusätzliches Wasser wird zugegeben, um die gewünschte Viskosität zu erreichen. Typischerweise haben Schlicker nach vorliegender Erfindung eine Viskosität im Bereich von 20'000 bis 40'000 cP gemessen bei 20 U/min an einem Haake-Viskosimeter, Modell RV3, 30 mm Behälterdurchmesser.

Eine der primären Vorteile der Schlickerherstellungs-Technik nach vorliegender Erfindung ist, dass Yttriumoxid in situ zugegeben wird, um das teilweise stabilisierte Zirkoniumdioxid zu bilden. Mit diesem Verfahren kann die Yttriumoxid-Menge kontrolliert werden um den gewünschten Gehalt an monokliner Phase im fertigen keramischen Körper zu erhalten. Zusätzlich kann die gewunschte Abstimmung zwischen Grösse und thermischer Schockbeständigkeit erhalten werden. Darüberhinaus hilft der Zusatz des Yttriumoxides die Bindefähigkeit des oder der anderen Binder, die im System angewendet werden, zu verbessern und auch die Gesamtkosten der Filterproduktion zu reduzieren. Mit vorgemischtem Yttriumoxid stabilisiertes Zirkoniumdioxid ist kommerziell verfügbar, ist aber sehr teuer. Es hat auch den Nachteil, dass die Menge an Yttriumoxid nicht in den beschriebenen Bereichen ist und deshalb das Material für die Anwendung nicht geeignet ist.

Keramische Körper nach vorliegender Erfindung können in Übereinstimmung mit dem Verfahren, wie in der US-Patentschrift 3,893,917 beschrieben, hergestellt werden. Nach vorliegender Erfindung wird das Schaummaterial durch eintauchen desselben in den wässrigen Schlicker imprägniert, derart, dass die Stege damit beschichtet werden und dass die Hohlräume weitgehend damit gefüllt sind. Das imprägnierte Material wird dann durch zusammendrücken zwischen voreingestellten Walzen ausgepresst, so dass vorzugsweise 80% des Schlickers entfernt werden und der Rest gleichmässig durch das Schaummaterial verteilt wird, vorzugsweise dergestalt, dass einzelne Poren durch die ganze Dicke des Schaummaterials hindurch in gleichmässiger Verteilung blockiert bleiben um die Gewundenheit der Fliesswege zu erhöhen.

Das beschichtete Schaummaterial wird dann auf an sich bekannte Weise getrocknet. Beispielsweise kann das Material für 8 bis 24 Stunden luftgetrocknet werden. Alternativ kann das Material bei einer Temperatur von 100°C bis 700°C für 15 Minuten bis 6 Stunden getrocknet werden. Weiters kann das Material durch Mikrowellen getrocknet werden.

Nach dem Trocknen wird das Material auf eine erhöhte Temperatur im Bereich von 1570°C bis 1620°C aufgeheizt und bei dieser Temperatur während einer Zeit von 15 Minuten bis 3 Stunden belassen. Während dieses Beheizungsschrittes wird das Schaummaterial ausgebrannt oder verdampft und die keramische Beschichtung wird gesintert. Dies ergibt einen verschmolzenen keramischen Schaumkörper mit einer Vielzahl von untereinander verbundenen Hohlräumen, umgeben von Stegen aus gebundener, verschmolzener oder gesinterter Keramik in der Gestalt des ursprünglichen flexiblen Schaumes. Mit dem Aufheizen und Abkühlen des keramischen Materials wird das Zirkoniumdioxid mindestens teilweise in kubischer Phase stabilisiert.

Keramische Körper gebildet in Uebereinstimmung mit vorliegender Erfindung haben eine Zusammensetzung enthaltend im wesentlichen von 40% bis 80% Zirkoniumdioxid, von 17% bis 59% Aluminiumoxid, von 1,1% bis 3,4% Yttriumoxid und von 1,1% bis 3,4% keramische Fasern. Bevorzugte Körper haben eine Zusammensetzung bestehend im wesentlichen aus 60% bis 65% Zirkoniumdioxid, von 30% bis 35% Aluminiumoxid, von 1,7% bis 2,2% Yttriumoxid und etwa 1% keramische Fasern. Zusätzlich sind 5% bis 80% des Zirkoniumdioxides darin typischerweise in einer monoklinen Phase und der Rest ist im wesentlichen in kubischer Phase. In einer vorzugsweisen Ausführungsform sind 40% bis 60% des Zirkoniumdioxides im keramischen Körper in einer monoklinen Phase, während der Rest im wesentlichen in einer kubischen Phase ist.

Es wurde gefunden, dass ein keramischer Körper in Uebereinstimmung mit vorliegender Erfindung viele wünschenswerte Eigenschaften besitzt. Die wichtigste dieser Eigenschaften ist die Tatsache, dass bei Raumtemperatur von 5 bis 80% des Zirkoniumdioxides im Körper in einer monoklinen Phase ist, während der Rest im wesentlichen in einer stabilen kubischen Phase ist. Als ein Resultat wird die Bildung von Makrorissen weitgehend verhindert und es können auch grosse Teile, insbesondere solche beispielsweise mit Seitenkantenlängen von grösser als 20 cm (8 inches) geformt werden. In einer bevorzugten Ausführungsform ist genügend Yttriumoxid zugemischt, so dass bei Raumtemperatur von 40% bis 60% des Zirkoniumdioxides in einer monoklinen Phase vorliegt.

Es ist weiter gefunden worden, dass die Keramikkörper nach vorliegender Erfindung eine viel grössere Festigkeit, sowohl bei Raumtemperatur, als auch bei erhöhten Temperaturen aufweisen, als entsprechende Keramikkörper mit Zirkoniumdioxid-Aluminiumoxid-Zusammensetzungen ohne Yttriumoxid. Die Keramikkörper nach vorliegender Erfindung haben ein Bruchmodul bei Raumtemperatur im Bereich von 160 psi (11,2 kg/cm2) bis 410 psi (28,7 kg/cm2) über einen Bereich der relativen Dichte von 10 - 18,5% und eine Hochtemperatur-Festigkeit im Bereich von 178 psi (12,46 kg/cm2) bis 166 psi (11,62 kg/cm2) bei einer Temperatur im Bereich von 1000 °C bis 1550 °C.

Es ist auch gefunden worden, dass die keramischen Körper nach vorliegender Erfindung bei einer bestimmten Festigkeit eine niedrigere Rohdichte aufweisen als entsprechende Zirkoniumdioxid-Aluminiumoxid-Körper gebildet ohne Yttriumoxid. Beispielsweise sind die Keramikkörper nach vorliegender Erfindung bei einer relativen Dichte von 12 bis 13% so fest, wie übliche Zirkoniumdioxid-Aluminiumoxid-Körper bei 18,5% relativer Dichte (relative Dichte = Rohdichte / theoretische Dichte). Dies ist von grösster Wichtigkeit für die Stahlindustrie, weil Filter mit niedriger Dichte leicht angegossen werden können und dem Fluss von Stahl niedrigen Widerstand entgegensetzen. Die keramischen Körper nach vorliegender Erfindung, welche für die Verwendung als Filter für geschmolzenes Metall geeignet sind, haben eine Rohdichte von etwa 10% bis 18,5%, vorzugsweise von 12% bis 15%, der theoretischen Dichte für das keramische Material derselben Grösse. Die theoretische Dichte von Yttriumoxid stabilisierten Zirkoniumdioxid-Aluminiumoxid ist 4,96 g/cm.

Ein weiterer Fortschritt vorliegender Erfindung liegt darin, dass grössere Filterstücke ohne Makrorisse hergestellt werden können, aufgrund des reduzierten Gehaltes an monokliner Phase. Es können beispielsweise Filter mit Seitenkantenlängen bis 100 cm (20 inches) hergestellt werden.

Die spezifischen Merkmale vorliegender Erfindung werden weiter verständlich aus den folgenden Beispielen.

BEISPIEL I

Ein thixotroper Schlicker wird in Uebereinstimmung mit vorliegender Erfindung hergestellt. Der Schlicker hat folgende Zusammensetzung:

| MATERIAL | Gewichtsprozent | Beispielhafter Ansatz (kg) |
|---|---|---|
| Zirkoniumdioxid | 56.2 | 117.327 |
| Aluminiumoxid | 28.2 | 58.89 |
| Aluminiumoxid-Fasern | 0.9 | 1.812 |
| Yttriumoxid | 2.0 | 4.24 |
| Heisses Wasser (40-50 °C) | 9.3 | 20.213 |
| Xanthan Gummi | 0.2 | 0.471 |
| Dispergiermittel | 1.9 | 3.986 |
| Wasser | 0.9 | 1.812 |
| Zusätzliches Wasser | 0 - 0.4 | 0 - 0.906 |

Der Schlicker wird wie folgt hergestellt:

1. Der Xanthan Gummi-Binder wird mit heissem Wasser durch Mischen in einem Mischer mit niedrigen Scherkräften (z.B. Modell HDM 75, hergestellt von Charles Ross & Son Company of Hauppage, New York) gemischt.

2. Das Yttriumoxid wird zum Dispergiermittel zugegeben und für etwa 15 Minuten mittels eines Impeller-Blattes oder eines sog. "lightening"-Mischers zu einer glatten Paste gemischt.

3. Die Yttriumoxid/Dispersiermittel-Paste wird dann zur Binderlösung zugegeben und in einem Mischer mit niedrigen Scherkräften für 10 Minuten gemischt.

4. Das Zirkoniumdioxid und das Aluminiumoxid werden in einem Mischer mit hohen Scherkräften (Modell RL 09, geliefert von Eirich of Maple, Ontario, Canada) für eine Minute gemischt. Die Keramikfasern werden dann zugegeben und für 3 Minuten wird stärker weitergemischt.

5. Der Binder aus dem Mischer mit niedrigen Scherkräften wird zu den trockenen Feststoffen in den Mischer mit hohen Scherkräften gegeben und für 3 Minuten sorgfältig vorgemischt. Der Ansatz wird für weitere 4 Minuten stärker gemischt und dann bei höchster Mischergeschwindigkeit für weitere 2 Minuten fertig gemischt.

10 x 10 x 2,5 cm und 10 x 5 x 2,5 cm grosse Keramikfilterkörper werden durch Zuschneiden von Polyurethanschaumstücken zu den obigen Dimensionen und durch Eintauchen derselben in den Schlicker hergestellt. Jedes Schaumstück wird durch ein Paar voreingestellter Walzen durchgelassen, um den überschüssigen Schlicker abzupressen. Die Stücke werden dann während einer Stunde luftgetrocknet und dann durch einen 60 kW Mikrowellentrockner mit einer Rate von 30 cm pro Minute bei einer Lufttemperatur von 35 °C bis 40 °C durchgeführt. Die getrockneten Filter werden dann bei 1600 °C während 3 Stunden gebrannt. Die Festigkeit bei Raumtemperatur und erhöhten Temperaturen einschliesslich des "Young's"-Moduls und des

Bruchmoduls werden gemessen. Die Festigkeit wird unter Verwendung eines 3-Punkt-oder 4-Punkt-Biegetestes gemessen. Das "Young's"-Modul wird mittels Ultraschallsgeschwindigkeitsmessungen unter Verwendung eines "V-Meters" der "NDT James Instruments" bestimmt. Zusätzlich wird die Rohdichte bestimmt. Das Volumen wird mittels eines digitalen Mikrometers gemessen, um die Länge, die Breite und die Höhe auf 0,01 mm genau zu erhalten, und das Gewicht wird mittels einer elektronischen Waage auf 0,01 g genau gemessen. Die Dichte wird dann durch Division des Gewichtes durch das Volumen erhalten.

Tabelle I beschreibt die Bruchfestigkeit bei Raumtemperatur unter Verwendung eines 4-Punkt-Tests und die "Young's"-Modul-Eigenschaften gegenüber der relativen Dichte für die 10 x 10 x 2,5 cm Körper, hergestellt wie oben beschrieben, und ein Vergleichsbeispiel aus Zirkoniumdioxid-Aluminiumoxid.

TABELLE I

| Relative Dichte (%) | E(GPa) | E(kpsi) | MOR (psi) | MOR (MPa) |
|---|---|---|---|---|
| 10.0 | 3.0 | 438.6 | 162 | 1.1 |
| 12.0 | 3.6 | 526.3 | 207 | 1.4 |
| 15.0 | 5.2 | 754.1 | 361 | 2.5 |
| 18.5 | 7.7 | 1112.6 | 408 | 2.8 |
| 18.5* | 8.0 | 1162.6 | 248 | 1.7 |

* Zirkoniumdioxid/Aluminiumoxid-Vergleichsbeispiel.
MOR = Modulus of rupture = Bruchmodul

Wie Tabelle I zeigt, ist die Festigkeit von mit Yttriumoxid stabilisierten Zirkoniumdioxid-Aluminiumoxid (YZA) etwa zweimal so gross wie von Zirkoniumdioxid-Aluminiumoxid (ZA). Oder, anders herum, YZA ist mit einer relativen Dichte von 12-13% etwa so stabil wie ein übliches ZA mit 18,5% relativer Dichte. Deshalb können mit YZA Filter mit niedrigerer Dichte hergestellt werden. Die Festigkeit von 10 x 10 x 2,5 cm YZA-Filtern werden mit dem 3-Punkt-Biegetest über einen bestimmten Temperaturbereich gemäss nachfolgender Tabelle II gemessen.

TABELLE II

| Temperatur (°C) | MOR (psi) | MOR (MPa) |
|---|---|---|
| 23 | 523 | 3.6 |
| 1000 | 178 | 1.2 |
| 1550 | 166 | 1.1 |

Da die Umwandlung von monokliner zu tetragonaler Phase bei etwa 1000 °C erfolgt, kann man einen Festigkeitsverlust bei oder über dieser Temperatur erwarten, wie in Tabelle II dargestellt. Jedoch verliert der YZA-Filter kaum von seiner Festigkeit zwischen 1000 °C und 1550 °C. Es ist zu beachten, dass der YZA-Filter bei 1550 °C immer noch ungefähr zweimal die Festigkeit eines üblichen ZA-Filters bei der entsprechenden Temperatur aufweist. Die Keramikkörper werden weiter auf deren Zirkoniumdioxid-Gehalt und auf der thermischen Ausdehnungscharakteristiken untersucht. Es kann gefunden werden, dass die YZA-Körper nur 28% Zirkoniumdioxid in monokliner Phase enthalten. Uebliche Zirkoniumdioxid-Alumniumoxid-Körper enthalten etwa 65% Zirkoniumdioxid in monokliner Phase. Es kann auch gefunden werden, dass die YZA-Körper nach vorliegender Erfindung einen wesentlich kleineren Volumen-Wechsel durch die Zirkoniumdioxid-Phasen-Umwandlungen, bei beiden, dem Aufheizen und Abkühlen, durchlaufen, aufgrund der kleineren monoklinen Phase. Deshalb wird in YZA-Körpern die Tendenz der Bildung von Mikrorissen während des Brennens wesentlich reduziert.

BEISPIEL II

Aus Gründen des Vergleiches werden keramische Filterkörper aus einem Zirkoniumoxid-Aluminiumoxid-Schlicker nur mit Calciumoxid stabilisiert, d.h. es werden keine Yttriumoxid-Zusätze angewendet. Der Schlicker hat die folgende Zusammensetzung

| Material | Gewichts-Teile |
|---|---|
| Calciumoxid stabilisiertes Zirkoniumdioxid | 52.7 |
| Aluminiumoxid | 33.4 |
| Aluminium-Fasern | 0.9 |
| Heisses Wasser | 9.7 |
| Xanthan-Gummi | 0.2 |
| Dispergiermittel | 1.7 |
| Zusätzliches Wasser | 1.1 |
| Eis | 1.4 |

Filter mit 4 Poren je laufenden cm und einer relativen Dichte von 15% werden mit dieser Zusammensetzung hergestellt. Die Filter werden durch Eintauchen von Stücken aus Polyurethanschaum in den Schlicker und in weiterer Uebereinstimmung mit dem Verfahren gemäss Beispiel I hergestellt.

Die kalt bestimmte MOR (4-Punkt-Messung) beträgt 292 psi (20,44 kg/cm2), was wesentlich tiefer ist als die 361 psi (25,27 kg/cm2), die für YZA-Filter mit derselben Dichte gemessen werden.

Wie aus dem Vorhergehenden gesehen werden kann, haben Keramikkörper ausgezeichnete Festigkeit, Dichte und Stabilitätseigenschaften und eignen sich insbesondere für die Verwendung bei der Filtration von geschmolzenem Metall in Uebereinstimmung mit vorliegender Erfindung.

Es ist ersichtlich, dass mit vorliegender Erfindung keramische Körper und insbesondere poröse Keramikkörper aus Yttriumoxid-stabilisiertem Zirkoniumdioxid-Aluminiumoxid geschaffen werden, welche die daran gestellten Anforderungen voll zu erfüllen vermögen. Alle Angaben in Prozenten oder Teilen beziehen sich auf das Gewicht, ausser es sind andere Angaben gemacht.

**Patentansprüche**

1. Poröser Keramikkörper geeignet zur Verwendung als Filter für geschmolzenes Metall, wobei der Körper eine offene Zellstruktur mit einer Vielzahl von untereinander verbundenen Hohlräumen, die von Stegen aus keramischem Material umgeben sind, darstellt, dadurch gekennzeichnet, dass das keramische Material der Körper eine wenigstens teilweise mit Yttriumoxid stabilisierte Zirkoniumdioxid-Aluminiumoxid-Zusammensetzung enthält oder daraus besteht.

2. Körper nach Anspruch 1, dadurch gekennzeichnet, dass die Zusammensetzung im wesentlichen von 40% bis 80% aus Zirkoniumdioxid, von 1,1% bis 3,4% Yttriumoxid und einem Rest von im wesentlichen Aluminiumoxid besteht.

3. Körper gemäss Anspruch 1, dadurch gekennzeichnet, dass die Zusammensetzung von 1,1% bis 3,4% keramische Fasern enthält.

4. Körper gemäss Anspruch 1, dadurch gekennzeichnet, dass der Körper eine Rohdichte im Bereich von 10% bis 18,5% der theoretischen Dichte für das keramische Material derselben Grösse hat.

5. Körper gemäss Anspruch 1, dadurch gekennzeichnet, dass der Körper eine Rohdichte von 12% bis 15% der theoretischen Dichte für das keramische Material derselben Grösse hat.

6. Körper gemäss Anspruch 1, dadurch gekennzeichnet, dass 5 bis 80 Gew.-% des Zirkoniumdioxides im Körper in einer monoklinen Phase und der Rest im wesentlichen in kubischer Phase vorhanden sind.

7. Körper gemäss Anspruch 1, dadurch gekennzeichnet, dass 40 bis 60 Gew.-% des Zirkoniumdioxides im Körper in einer monoklinen Phase und der Rest im wesentlichen in kubischer Phase vorhanden sind.

8. Körper gemäss Anspruch 1, dadurch gekennzeichnet, dass der Bruchmodul bei Raumtemperatur im Bereich von 160 psi (11,2 kg/cm2) bis 410 psi (28,7 kg/cm2) ist.

9. Körper gemäss Anspruch 1, dadurch gekennzeichnet, dass die Hochtemperaturfestigkeit im Bereich von 178 psi (12,46 kg/cm2) bis 166 psi (11,62 kg/cm2) bei einer Temperatur im Bereich von 1000°C bis 1550°C hat.

10. Verfahren zur Herstellung eines keramischen Körpers, geeignet zum Gebrauch als Filter für geschmolzenes Metall, umfassend:
Bildung eines wässrigen thixotropen Schlickers mit einer Zusammensetzung enthaltend im wesentlichen von 32% bis 64% Zirkoniumdioxid, von 1,0% bis 3,4% Yttriumoxid, von 13,6% bis 47,2% Aluminiumoxid und einem Rest von im wesentlichen Wasser,
Imprägnieren eines porösen Substratmaterials mit dem Schlicker durch Eintauchen dieses Materials im Schlicker,
Trocknen des imprägnierten Materials und Aufheizen des imprägnierten Materials auf eine erhöhte Temperatur, um das Substratmaterial zu verflüchtigen und sintern des keramischen Materials, wobei das Zirkoniumdioxid zumindest teilweise während des Aufheizens stabilisiert wird.

11. Verfahren nach Anspruch 10, dadurch gekennzeichnet, dass Schritt der Bildung des Schlickers die Zugabe von Yttriumoxid zur Stabilisierung des Zirkoniumdioxides in situ umfasst.

12. Verfahren nach Anspruch 10, dadurch gekennzeichnet, dass der Schritt des Aufheizens des imprägnierten Materials die Erwärmung auf Temperaturen im Bereich von 1570°C bis 1620°C und halten auf diesen Temperaturen für einen Zeitintervall im Bereich von 15 Minuten bis 3 Stunden umfasst, wobei ein keramischer Körper mit 5% bis 80% des Zirkoniumdioxides in monokliner Phase und einem Rest an Zirkoniumdioxid im wesentlichen in kubischer Phase gebildet wird.

13. Verfahren gemäss Anspruch 10, dadurch gekennzeichnet, dass der Schritt der Bildung des Schlickers die Zugabe von 0,2% bis 0,3% eines Binders, von 0,8% bis 3,0% keramischer Fasern und von 0,2% bis 2,0% eines Dispergiermittels zum Schlicker umfasst.

14. Verfahren gemäss Anspruch 10, dadurch gekennzeichnet, dass der Schritt der Bildung des Schlickers das trockene Vormischen des Zirkoniumdioxides und Aluminiumoxides und die Zugabe einer Lösung enthaltend das Yttriumoxid zu den trocken vorgemischten Materialien umfasst.

15. Wässriger Schlicker zur Verwendung bei der Herstellung eines keramischen Körpers, geeignet zum Gebrauch als Filter für geschmolzene Metalle, dadurch gekennzeichnet, dass der Schlicker, bezogen auf den Feststoffgehalt, 40 bis 80 Gew.-% in situ mit 1,1 bis 3,4 Gew.-% Yttriumoxid stabilisiertes Zirkoniumdioxid, von 13,6% bis 47,2% Aluminiumoxid und von 1,1% bis 3,4% keramische Fasern enthält.

## Claims

1. Porous ceramic body suitable for use as a molten metal filter, the body having an open cell structure with a plurality of interconnected pores surrounded by webs of ceramic material, characterised in that the ceramic material of the bodies contains or consists of a zirconia-alumina composition at least partially stabilised with yttria.

**2.** Body according to claim 1, characterised in that the composition consists essentially of 40 % to 80 % zirconia, 1.1 % to 3.4 % yttria and the balance essentially alumina.

**3.** Body according to claim 1, characterised in that the composition contains 1.1 % to 3.4 % ceramic fibres.

**4.** Body according to claim 1, characterised in that the body has a gross density in the region of 10 % to 18.5 % of the theoretical density for ceramic material of the same size.

**5.** Body according to claim 1, characterised in that the body has a gross density of 12 % to 15 % of the theoretical density for ceramic material of the same size.

**6.** Body according to claim 1, characterised in that 5 to 80 % by weight of the zirconia present in the article is in a monoclinic phase and the balance is essentially in a cubic phase.

**7.** Body according to claim 1, characterised in that 40 to 60 % by weight of the zirconia present in the article is in a monoclinic phase and the balance is essentially in a cubic phase.

**8.** Body according to claim 1, characterised in that the modulus of rupture at room temperature is in the region of 160 psi (11.2 kg/cm$^2$) to 410 psi (28.7 kg/cm$^2$).

**9.** Body according to claim 1, characterised in that the high-temperature strength is in the region of 178 psi (12.46 kg/cm$^2$) to 166 psi (11.62 kg/cm$^2$) at a temperature in the region of 1000 °C to 1550 °C.

**10.** Process for producing a ceramic body suitable for use as a molten metal filter, including:
forming an aqueous thixotropic slurry with a composition containing essentially 32 % to 64 % zirconia, 1.0 % to 3.4 % yttria, 13.6 % to 47.2 % alumina and the balance essentially water,
impregnating a porous substrate material with the slurry by immersing this material in the slurry,
drying the impregnated material and heating the impregnated material to a high temperature in order to volatilise the substrate material and sinter the ceramic material, the zirconia being at least partially stabilised during heating.

**11.** Process according to claim 10, characterised in that the step of forming the slurry includes adding yttria in order to stabilise the zirconia in situ.

**12.** Process according to claim 10, characterised in that the step of heating the impregnated material includes heating to temperatures in the region of 1570 °C to 1620 °C and maintaining these temperatures for a period of time in the region of 15 minutes to 3 hours, a ceramic body with 5 % to 80 % of the zirconia in a monoclinic phase and the balance of the zirconia essentially in a cubic phase being formed.

**13.** Process according to claim 10, characterised in that the step of forming the slurry includes adding 0.2 % to 0.3 % of a binder, 0.8 % to 3.0 % ceramic fibres and 0.2 % to 2.0 % of a dispersant to the slurry.

**14.** Process according to claim 10, characterised in that the step of forming the slurry includes dry premixing the zirconia and the alumina and adding a solution containing the yttria to the dry premixed materials.

**15.** Aqueous slurry for use in the production of a ceramic body, suitable for use as a molten metal filter, characterised in that the slurry contains 40 to 80 % by weight zirconia stabilised in situ with 1.1 to 3.4 % by weight yttria, 13.6 % to 47.2 % alumina and 1.1 % to 3.4 % ceramic fibres in relation to the solids content.

**Revendications**

**1.** Corps céramique poreux, utilisable comme filtre pour métal fondu, le corps constituant une structure à alvéoles ouvertes comportant une pluralité de cavités reliées entre elles et entourées de parois en matériau céramique, caractérisé en ce que le matériau céramique du corps contient une composition

9

de dioxyde de zirconium-oxyde d'aluminium au moins partiellement stabilisée par de l'oxyde d'yttrium ou en est constituée.

2. Corps selon la revendication 1, caractérisé en ce que la composition est constituée essentiellement par 40 à 80 % de dioxyde de zirconium, 1,1 % à 3,4 % d'oxyde d'yttrium et un reste en oxyde d'aluminium essentiellement.

3. Corps selon la revendication 1, caractérisé en ce que la composition contient de 1,1 % à 3,4 % de fibres céramiques.

4. Corps selon la revendication 1, caractérisé en ce qu'il possède une masse volumique apparente de l'ordre de 10 % à 18,5 % de la masse volumique théorique du matériau céramique de même taille.

5. Corps selon la revendication 1, caractérisé en ce qu'il présente une masse volumique apparente de l'ordre de 12 % à 15 % de la masse volumique théorique du matériau céramique de même taille.

6. Corps selon la revendication 1, caractérisé en ce que 5 à 80 % en poids du dioxyde de zirconium du corps sont présents en phase monoclinique et le reste essentiellement en phase cubique.

7. Corps selon la revendication 1, caractérisé en ce que 40 à 60 % en poids du dioxyde de zirconium du corps sont présents en phase monoclinique et le reste essentiellement en phase cubique.

8. Corps selon la revendication 1, caractérisé en ce que le module de rupture est de l'ordre de 160 livres/pouce carré (11,2 kg/cm$^2$) à 410 livres/pouce carré (28,7 kg/cm$^2$) à la température ambiante.

9. Corps selon la revendication 1, caractérisé en ce que sa résistance aux hautes températures est de l'ordre de 178 livres/pouce carré (12,46 kg/cm$^2$) à 166 livres/pouce carré (11,62 kg/cm$^2$) à une température de l'ordre de 1 000°C à 1 550°C.

10. Procédé de fabrication d'un corps céramique utilisable comme filtre pour métal fondu, comprenant :
    la formation d'une barbotine thixotrope aqueuse ayant une composition contenant essentiellement de 32 % à 64 % de dioxyde de zirconium, de 1,0 % à 3,4 % d'oxyde d'yttrium, de 13,6 % à 47,2 % d'oxyde d'aluminium et un reste constitué essentiellement d'eau,
    l'imprégnation d'un matériau substrat poreux par la barbotine, par immersion de ce matériau dans la barbotine,
    le séchage du matériau imprégné et le chauffage du matériau imprégné à une température élevée, pour volatiliser le matériau substrat et fritter le matériau céramique, le dioxyde de zirconium étant stabilisé au moins partiellement pendant le chauffage.

11. Procédé selon la revendication 10, caractérisé en ce que l'étape de formation de la barbotine comprend l'addition d'oxyde d'yttrium in situ en vue de stabiliser le dioxyde de zirconium.

12. Procédé selon la revendication 10, caractérisé en ce que l'étape de chauffage du matériau imprégné comprend le chauffage à des températures de l'ordre de 1 570°C à 1 620°C et le maintien à ces températures pendant une durée comprise entre 15 min et 3h, un corps céramique comportant 5 % à 80% de dioxyde de zirconium en phase monoclinique et un reste de dioxyde de zirconium essentiellement en phase cubique étant formé.

13. Procédé selon la revendication 10, caractérisé en ce que l'étape de formation de la barbotine comprend l'addition à la barbotine de 0,2 % à 0,3 % d'un liant, de 0,8 % à 3,0 % de libres céramiques et de 0,2 % à 2,0 % d'un agent de dispersion.

14. Procédé selon la revendication 10, caractérisé en ce que l'étape de formation de la barbotine comprend le prémélange à sec du dioxyde de zirconium et de l'oxyde d'aluminium et l'addition d'une solution contenant l'oxyde d'yttrium aux substances prémélangées à sec.

15. Barbotine aqueuse à utiliser lors de la fabrication d'un corps céramique utilisable comme filtre pour métaux fondus, caractérisé en ce que la barbotine, rapportée à la teneur en solides, contient 40 à 80 % en poids de dioxyde de zirconium stabilisé in situ par 1,1 à 3,4 % en poids d'oxyde d'yttrium, de 13,6 % à 47,2 % d'oxyde d'aluminium et de 1,1 % à 3,4 % de fibres céramiques.